# EUROPEAN PATENT APPLICATION

(11) **EP 4 254 086 A1**
(43) Date of publication of application: **04.10.2023**
(21) Application number: 22165746.3
(22) Date of filing: 31.03.2022
(51) Int. Cl.: G05B 17/02

(54) **TRANSFORMING AN ONTOLOGY INTO A GRAPH-BASED INFORMATION MODEL FOR AUTOMATION PURPOSES**

(71) Applicant: Siemens Aktiengesellschaft, 80333 München (DE)
(72) Inventor: Anicic, Darko, 81379 München (DE); Thuluva, Aparna Saisree, 81739 München (DE)
(74) Representative: Siemens Patent Attorneys

(57) **Abstract**

Transforming graph-based industrial information models, e.g. OPC UA information models, into a formal semantic representation of an ontology, e.g., an OWL ontology, has proven beneficial for a number of application cases being concerned with information retrieval and processing, such as querying huge industrial information models, validating these information models, providing data efficiently to industrial process analytics etc. The present embodiments are bridging an existing gap in the reverse direction to achieve end-to-end semantic interoperability between an information model as processed on components of an industrial automation control system and an ontology being a formal semantic representation of the originating information model.

## Description

### TECHNICAL FIELD

The disclosed embodiments generally relate to the field of industrial automation control systems. Specifically, the disclosed embodiments relate to a computer-implemented method for transforming an ontology into a graph-based information model of at least one component of an industrial automation control system.

### BACKGROUND

Industrial automation control systems are designed to capture real-world instrumentation data, e.g., sensor data and actuate responses in real time, while operating reliably and safely.

In recent times, semantic web technologies including a usage of semantic information models have gained a predominant role in specifying communicative and behavioral aspects of such components.

Industrial automation standards such as OPC UA Open Platform Communications Unified Architecture) enable semantic interoperability between industrial machines from diverse domains by providing information models. These information models may be defined in formats such as XML (Extensible Markup Language), a textual format that is both human-readable and machine-readable.

Information modelling is a key concept in the quest to enable industrial automation control systems not only to deliver or consume data but also the express a meaning of data. Accordingly, semantic web formats such as RDF (Resource Description Framework), RDFS (RDF Schema), OWL (Web Ontology Language), SPARQL (SPARQL Protocol and RDF Query Language), etc. along with a large number of tools to efficiently create, store and query information models have been developed by semantic web communities.

Transforming graph-based industrial information models into a formal semantic representation of an ontology, e.g., an OWL ontology, has proven beneficial for a number of application cases being concerned with information retrieval and processing, such as querying huge industrial information models, validating these information models, providing data efficiently to industrial process analytics etc. The Applicant has proposed a corresponding method for transforming a data model for automation purposes into a target ontology in the published International Patent Application WO2020/104019A1.

In some of the application cases mentioned above, the OWL ontologies may be altered or amended by said information processes. This would make it desirable to implement amendments made in the OWL ontology not only in the OWL ontology itself but also in the originating graph-based information model.

Currently, however, there is no way for transforming amended ontologies back into the originating graph-based information model in a format such as XML. The lack of a reverse transformation opportunity, however, is not merely a lack of convenience, it may also result in considerable additional work. Since servers running on components of the industrial automation control system may only process the originating graph-based information model and not the OWL ontology, it is difficult or almost impossible to map single amendments made in the ontology to the originating graph-based information model. Therefore, bi-directional mapping may be highly desirable in order to achieve end-to-end semantic interoperability.

Accordingly, there is a need in the art for bridging an existing gap in the reverse direction to achieve end-to-end semantic interoperability between an information model as processed on components of an industrial automation control system and an ontology being a formal semantic representation of the originating information model. In other words, there is a need in the art to attain a method transforming an information model in the reverse direction.

### SUMMARY AND DESCRIPTION

The present embodiments relate to a method for transforming an ontology pertaining to at least one component of an industrial automation control system into a graph-based information model for automation purposes, the method including the steps of:
- retrieving at least one node class of said ontology and expressing said at least one node class by at least one node in the graph-based information model;
- retrieving semantic descriptions of at least one object property and/or at least one class of the ontology and expressing the semantic descriptions by at least one forward reference and at least one additional backward reference for interconnecting said at least one node with at least one child node in the graph-based information model;
- structuring the graph-based information model by a machine-readable syntax.

The present embodiments further relate to a transformation unit comprising a processor and a data storage device having stored thereon computer executable program code, which, when executed by the processor, causes the processor to:
- retrieve at least one node class of said ontology and expressing said at least one node class by at least one node in the graph-based information model;
- retrieve semantic descriptions of at least one object property and/or at least one class of the ontology and express the semantic descriptions by at least one forward reference and at least one additional backward reference for interconnecting said at least one node with at least one child node in the graph-based information model;
- structure the graph-based information model by a machine-readable syntax.

### DETAILED DESCRIPTION

Embodiments as disclosed herein may generally address a reverse transformation or reverse mapping from one or more ontologies to a semantically enriched and graph-based data model for automation purposes. More specifically, the embodiments may address a reverse transformation from one or more OWL ontologies to an OPC UA XML format.

OWL or Web Ontology Language is a family of knowledge representation languages for authoring ontologies. OWL is characterized by formal semantics and built upon an XML (Extensible Markup Language) standard of the World Wide Web Consortium's (W3C) for objects of a Resource Description Framework or RDF.

OPC UA or Open Platform Communications Unified Architecture is a cross-platform, open-source, IEC62541 standard for data exchange from sensors to cloud applications developed by the OPC Foundation.

In the following, compound names including one or more medial capital letters - e.g. »TypeDefinitionNodes« - are used to refer to authoritative names used in the specification »OPC Unified Architecture« of the OPC Foundation or in the OWL specification. These authoritative names are assumed to be known and for a person skilled in the art. Hereinafter, these authoritative names are, therefore, introduced without explanation.

At present, only a unidirectional mapping from the OPC UA XML format into an OWL ontology is known, which is hereinafter referred to as »forward direction«. There is no automated method for transforming OWL ontologies into the OPC UA XML format, which is hereinafter referred to as »reverse direction«. The present embodiments propose a solution to this gap.

For a better explanation of the transformation pertaining to the reverse direction, the methods for the forward direction will first be recapitulated in more detail below. Accordingly, the next sections will be devoted to the mapping from OPC UA to OWL.

OPC UA offers a multiplicity of node classes such as ObjectType, VariableType, DataType, ReferenceType, PropertyType, Method, Object, Variable and View. Each OPC UA node has a set of attributes and references.

For a mapping from the OPC UA XML format into an OWL ontology these node classes, their attributes, and references are mapped to the concepts of OWL such as OWL classes, OWL individuals, different OWL properties such as annotation properties, object properties, datatype properties and OWL axioms. The table as shown below presents some exemplary mappings from OPC UA to OWL:

| # | OPC UA | OWL |
|---|---|---|
| 1 | ObjectType | ObjectType rdf:type |
| | | OWL:Class |
| 2 | VariableType | VariableType rdf:type |
| | | OWL:Class |
| 3 | DataType | DataType rdf:type |
| | | OWL:Class |
| 4 | ReferenceType | ReferenceType rdf:type |
| | | OWL:ObjectProperty |
| 5 | BaseObjectType | BaseObjectType rdf:type |
| | | OWL:Class, subClassOf(ObjectType) |
| 6 | Object Instance Declaration | Object rdf:type OWL:Class, subClassOf(Base) (Base is superclass of Object, Variable & Method classes) |
| 7 | Object Instance | Object rdf:type |
| | | OWL:NamedIndividual |
| 8 | Attributes on Type nodes and Instance Declaration nodes | OWL:AnnotationProperty |

Mapping from OPC UA to OWL may specifically mean applying rules for retrieving or parsing semantic descriptions within the data model of OPC UA, classifying these semantic descriptions with common concepts and subsuming the classified concepts to a formal data representation in a semantic ontology language.

Row number 1 in the table shows the mapping from an OPC UA ObjectType node to OWL. An ObjectType node in OPC UA is mapped to an OWL class. Similarly, VariableType, DataType nodes are also mapped to OWL class.

Row number 6 in the table shows the mapping from an OPC UA Object Instance Declaration node to OWL. InstanceDeclaration is a special type of node in OPC UA. This node is either an Object node, a Method node or a Variable node with a modelling rule. In OWL, it is mapped to an OWL class being a subclass of a corresponding node wherein the corresponding node is a superclass to the corresponding subclass. In the exemplary Object Instance Declaration an Object InstanceDeclaration is a subClass of the class entitled »Object«. The Object, Variable and Method nodes which are not instance declarations are mapped to OWL NamedIndividuals in the mapping as shown in row number 7 in the table.

Each node class in OPC UA has common attributes inducing attributes such as NodeId, NodeClass, BrowseName, Description, DisplayName etc. Similarly, each node has some specific attributes. A Variable node, for example, has attributes such as ArrayDimensions, Value, ValueArray etc. which are specific to a Variable node. All these OPC UA attributes are mapped to OWL properties such as annotation properties and datatype properties. This is shown in row number 8 of the table depicted above.

References in OPC UA represent relationship between two OPC UA nodes. These OPC UA references are transformed to OWL using OWL object properties. In case of OPC UA nodes such as ObjectType, DataType, VariableType and PropertyType which are mapped to OWL classes, their references are mapped to OWL axioms. In case of OPC UA nodes such as Object, Variable and Method instance nodes which are mapped to OWL NamedIndividuals, their references are mapped to OWL object properties.

The table as shown below presents mapping of modelling rules from OPC UA to OWL. Each instance declaration in OPC UA has a modelling rule which could be mandatory (see table »Mandatory modelling rule) or optional (see table »Optional modelling rule«). Said modelling rules are mapped differently in OWL. The mandatory rule is modelled with an OWL axiom »allValuesFrom« (see table »all«) while the optional rule is modelled using an OWL axiom »minQualifiedCardinality« (see table »min 0«).

| OPC UA Modelling Rule | OWL |
|---|---|
| Mandatory Modelling Rule | <BrowseNameObjectProperty> all <InstanceDeclarationClass> |
| Optional Modelling Rule | <BrowseNameObjectProperty> min 0 <InstanceDeclarationClass> |

The above explanations of the known forward direction are not intended to provide a complete representation. Rather, these explanations are intended to contribute to a better understanding of the embodiments. Having now concluded the explanation of the known forward direction, the remainder is devoted to the description of the present embodiments with respect to the reverse direction.

The present embodiments generally pertain to a method for transforming an ontology into a graph-based information model for automation purposes such as OPC UA.

Mapping or transforming from OWL to OPC UA may specifically mean applying rules for retrieving or parsing classes, properties and individuals within the semantic ontology language, classifying these classes, properties and individuals with common concepts and subsuming the classified concepts to semantic descriptions within nodeset concept of OPC UA.

A fundamental concept underlying the embodiments is an establishment of mapping rules for transforming in the reverse direction. Thereby ontology prefixes, classes, individuals, properties i.e., OWL annotation properties, object properties, datatype properties, xsd datatypes may be converted or subsumed to OPC UA XML nodeset concepts. Due to the strictly defined structure of OWL and also of OPC UA XML the transformation is in most cases unambiguous.

In some cases, however, there is no one-to-one mapping from OWL to OPC UA. These cases may, therefore, regarded to form a basis for a successful transformation. Mapping rules for such ambiguities may therefore be essential in a sense that a transformation is only possible when applying these mapping rules according to embodiments proposed hereinafter.

In the following section a first mapping rule is introduced, the first mapping rule pertaining to a mapping of a parent node ID. In an OPC UA XML nodeset, if a node (node C) is referenced by another node (node P), then the referencing node (node P) becomes the parent node of the referenced node (node C). Becoming a parent node may include an act of entering a node ID of the parent node into an OPC UA field entitled ParentNodeID of the child node C.

This information is ignored in an OPC UA to OWL mapping (the forward direction not actually considered here), since it is considered as redundant information in OWL. However, in terms of OPC UA XML nodeset it is an important piece of information. Therefore, there is no one-to-one mapping for ParentNodeId. In order to implement a complete transformation in reverse direction form OWL to OPC UA, a mapping rule pertaining to the parent node identification is derived. This mapping rule for the ParentNodeID is depicted in the following table:

| OWL | | | OPC UA |
|---|---|---|---|
| SourceNode rdf:type OWL:Class; | | | <<UANodeClass> |
| | rdfs:subClassOf [ a owl:Restriction ; | | BrowseName=<TargetNode_BrowseName> |
| | owl:allValuesFrom <TargetNode> ; | | ParentNodeId=<SourceNodeNodeId> |
| | owl:onProperty <reference> ] ; | | _ <UANodeClass>> |

| SourceNode rdf:type OWL:Class; | | | <<UANodeClass> |
|---|---|---|---|
| | | rdfs:subClassOf [a owl:Restriction ; | BrowseName=<TargetNodeBrowseName> |
| | | owl:onProperty <reference> ; | _ ParentNodeId=<SourceNode_NodeId> |
| | | owl:minQualifiedCardinality | <UANodeClass>> |
| | | "0"^^xsd:nonNegativeInteger ; | |
| | | owl:onClass <TargetClass>]; | |

On a transformation of an OWL modelling of a source node class (OWL SourceNode, see table), a referenced target node class (OWL TargetNode) is modelled as an OPC UA child node. In order to model the referencing source node as a OPC UA parent node, the ID (OWL SourceNOde_NodeID) of the source node is entered into the OPC UA field ParentNodeID (see table) of the transformed OPC UA modelling of the target node. This mapping rule may be applied for both, mandatory modelling rules (first row of table above) and optional modelling rules (second row of table above).

In the following section a second mapping rule is introduced, the second mapping rule pertaining to a mapping of references. References in OPC UA describe the relationship between a node and another node. A reference between two nodes is typed by a ReferenceType giving meaning to the relation. References in OPC UA describe the relationship - e.g. »HasProperty« - between a node and another node.

The code example as shown below models an exemplary reference »HasProperty« between a node entitled »ServerCapabilitiesType« which refers to a node »ServerProfileArray«.
1. <UAObjectType NodeId="i=2013" BrowseName="ServerCapabilitiesType">
2. <Reference ReferenceType="HasProperty">i=2014</Reference>
3. </UAObjectType>
4. And
5. <UAVariable NodeId="i=2014" BrowseName="ServerProfileArray" ParentNodeId="i=2013" DataType="String" ValueRank="1">
6. <Reference ReferenceType="HasProperty" IsForward="false">i=2013</Reference>
7. </UAVariable>

In a natural language one could say that the
ServerCapabilitiesType has the property of a ServerProfileArray.

In the above code example, the source node ServerCapabilitiesType node refers to the target node ServerProfileArray with a »HasProperty« reference in a forward hierarchical manner, see the second code line (2). This means in detail that the node modeled by the first code line (1) defines a node of a ServerCapabilitiesType having a node index number i of 2013, the reference modeled by the second code line (2) defines a reference of a ReferenceType »HasProperty« having a node index number i of 2014. The third code line (3) completes the node modeling »UAObjectType«.

In a second part of the above code example (code lines 5 to 7), a backward reference modelling is additionally provided from ServerProfileArray node to ServerCapabilitiesType node (see code line 6). This additionally provided backward reference could be considered redundant in other data models but is required in the OPC UA data model.

In summary, a reference is modeled in OPC UA from a parent node to a child node in a forward hierarchical manner and, in addition, from the child node to the parent node in a backward reference modeling.

Regarding the question of how this redundant OPC UA modeling affects the transformed modelling in OWL, it can be stated that the redundancy in the OWL modeling is eliminated. The OPC UA forward and backward references are considered as redundant information and only reference mapping in the forward direction is mapped.

As to the transformation or mapping in the reverse direction (from the ontology description language OWL into an UPC UA nodeset formulated in XML), however, this redundancy has to be added to the XML nodeset by applying a mapping rule for the mapping of references. This mapping rule, when applied to a OWL-modelling of a reference, requires a generation of two OPC UA modellings, a reference in a forward hierarchical manner and an additionally provided backward reference.

This mapping rule for the mapping of references from OWL to OPC UA is depicted in the following table:

| OWL | | OPC UA |
|---|---|---|
| SourceNode rdf:type OWL:Class; | | <<UANodeClass> |
| | | BrowseName=<SourceNode_BrowseName> |
| | | <Reference ReferenceType=<Reference> |
| | rdfs:subClassOf [ a owl:Restriction ; | >TargetNode_NodeId</Reference> |
| | owl:allValuesFrom <TargetNode> ; | <UANodeClass>> |
| | owl:onProperty <reference> ] ; | <<UANodeClass> |
| | | BrowseName=<TargetNode_BrowseName> |
| | <Reference ReferenceType=<Reference> IsForward="false"> | |
| | >SourceNode_NodeId</Reference> <UANodeClass>> | |
| SourceNode rdf:type OWL:NamedIndividual; <reference> <TargetNode> ; | <<UANodeClass> | |
| | BrowseName=<SourceNode BrowseName> | |
| | <Reference ReferenceType=<Reference> >TargetNode_NodeId</Reference> | |
| | <UANodeClass>> | |
| | <<UANodeClass> | |
| | BrowseName=<TargetNodeBrowseName> | |
| | _ <Reference ReferenceType=<Reference> | |
| | IsForward="false" | |
| | >SourceNode_NodeId</Reference> <UANodeClass>> | |

On a transformation of an OWL modelling of a reference between a source node (OWL SourceNode, see table) and a referenced target node (OWL TargetNode), two references are modeled in OPC UA.

This is expressed in the table by the fact that two rows representing the modeling in OWL (on the left-hand side of the table) are opposed to four rows (on the right-hand side of the table) for representing the modeling in OPC UA XML.

The first row on the left-hand side of the table depicts an OWL modelling of a Reference for an OPC UA type node including, e.g. ObjectType nodes, VariableType nodes, PropertyType nodes, DataType nodes, InstanceDeclaration nodes, etc. The second row on the left-hand side of the table depicts an OWL modelling of a Reference for an OPC UA instance node including, e.g., Object nodes, Variable nodes, Method nodes etc.

A respective first OPC UA reference (see first and third rows on the right-hand side of the table) is modelled in a forward hierarchical manner from a parent node to a child node and, in addition, a respective second reference (see second and fourth rows on the right-hand side of the table) is modelled in a backward reference from the child node to the parent node.

In the following section a third mapping rule is introduced, the third mapping rule pertaining to a mapping of modelling rules.

In the code example as shown below a ServerProfileArray node (target node) is modeled in lines 5-7. The target node ServerProfileArray is an InstanceDeclaration node with a modelling rule Mandatory (i=78 means modelling rule is Mandatory) and this InstanceDeclaration is referenced from a source node ServerCapabilitiesType node as modeled by lines 1-3.
1. <UAObjectType NodeId="i=2013" BrowseName="ServerCapabilitiesType">
2. <Reference ReferenceType="HasProperty">i=2014</Reference>
3. </UAObjectType>
4. And
5. <UAVariable NodeId="i=2014" BrowseName="ServerProfileArray" ParentNodeId="i=2013" DataType="String" ValueRank="1">
6. <Reference ReferenceType="HasModellingRule">i=78</Reference>
7. </UAVariable>

As can be seen in the above example, in OPC UA, the modelling rule is present in the InstanceDeclaration node itself. In the transformed OWL modelling, however, the modelling rule is modeled in the source node »ServerCapabilitiesType« as shown in the example below

```
 SourceNode:
 ServerCapabilitiesType rdf:type OWL:Class;
   rdfs:subClassOf [ a owl:Restriction ;
                          owl:allValuesFrom ServerProfileArray ;
                          owl:onProperty HasProperty ] ;
```

```
 TargetNode (instanceDeclaration node):
 ServerProfileArray rdf:type OWL:Class;
                          isInstanceDeclaration true;
```

The mapping rule for the mapping of modelling rules from OWL to OPC UA is depicted in the following table:

| OWL | | OPC UA |
|---|---|---|
| SourceNode rdf:type OWL:Class; | | «UANodeClass> |
| | rdfs:subClassOf [ a owl:Restriction ; | BrowseName=<TargetNode_BrowseName> |
| | owl:allValuesFrom <TargetNode> ; | <Reference |
| | owl:onProperty <reference> ] ; | ReferenceType="HasModellingRule">i=78 |
| | | </Reference> |
| | | <UANodeClass>> |

| SourceNode rdf:type OWL:Class; | | «UANodeClass> |
|---|---|---|
| | rdfs:subClassOf [a owl:Restriction ; owl:onProperty <reference> ; owl:minQualifiedCardinality "0" ^^xsd:nonNegativeInteger ; owl:onClass <TargetClass>]; | BrowseName=<TargetNode_BrowseName> |
| | | <Reference |
| | | ReferenceType="HasModellingRule">i=80 |
| | | </Reference> |
| | | <UANodeClass>> |

Accordingly, the mapping rule for the mapping of modelling rules from OWL to OPC UA stipulates using the OWL modelling rule in the Source Node and mapping this modelling rule to the OPC UA node (InstanceDeclaration) referenced by the source node.

The mapping rule for the mapping of modelling rules from OWL to OPC UA may, more generally, include retrieving semantic descriptions of at least one source node class including a modelling rule and expressing the semantic descriptions by at least one (target) node being referenced by the source node in the graph-based information model.

The modeling rules according to the embodiments as proposed above may be used individually or in any suitable combination. A selection of the modeling rules defined above may be used individually or in any combination, e.g., according to a prior assessment of the structure of the ontology to be transformed.

The modeling rules according to the embodiments as proposed above may the mapping rules for reverse mapping may be implemented in any programming language Including Java, .NET etc.

An information model obtained by implementing the present embodiments may advantageously result in a valid OPC UA information model. Of course, this is true if the input OPC UA model in RDF/OWL is valid.

Information models based on RDF/OWL may be advantageously validated using semantic tools such as SHACL. Advantageously a mechanism is provided to make sure that the input model is valid. Using the present embodiments, any such extension is enabled to be mapped from RDF/OWL to OPC UA, as well as to make sure that the obtained OPC UA model is valid.

This feature may be of great value as an input OPC UA model in RDF/OWL may be obtained by extending OPC UA information models with other ontologies and knowledge graphs. Using the present embodiments, any such extension is enabled to be mapped from RDF/OWL to OPC UA, as well as to make sure that the obtained OPC UA model is valid.

In an example below a snippet of an OWL ontology which may have been generated by an OPC UA to OWL mapping in the »forward direction« is presented:

```
 <http://example.robot/i5001>
      a me:Object , NS2:MotionDeviceSystemType ;
      rdfs:label "Robot1" ;
      ia:accessRestrictions "0"^^xsd:unsignedShort ;
      ia:browseName "http://example.robot/Robot1"^^xsd:anyURI ;
      ia:displayName "Robot1 ;
      ia:eventNotifier "0"^^xsd:unsignedByte ;
      ia:nodeClass "0"^^xsd:int ;
      ia:nodeId "http://example.robot/i5001"^^xsd:anyURI ;
      ia:userWriteMask "0"xsd:unsignedInt ;
      ia:writeMask "0""^^xsd:unsignedInt ;
      ta:isInstanceDeclaration false ;
      ta:isObject true ;
      NS2:controllers <http://example.robot/i5002> ;
      NS2:motionDevices <http://example.robot/i5003> ;
      NS2:safetyStates <http://example.robot/i5004> ;
      NS0:hasComponent <http://example.robot/i5003> ,
      <http://example.robot/i5002> , <http://example.robot/i5004> .
```

An exemplary XML nodeset below may be a possible result of a transformation of the above ontology modeled in OWL according to the proposed embodiments:

```
  <UAObject NodeId="ns=1;i=5001" BrowseName="1:Robot1">
   <DisplayName>Robot1</DisplayName>
   <References>
     <Reference ReferenceType="i=40">ns=2;i=1002</Reference>
     <Reference ReferenceType="i=47">ns=1;i=5002</Reference>
     <Reference ReferenceType="i=47">ns=1;i=5003</Reference>
     <Reference ReferenceType="i=47">ns=1;i=5004</Reference>
     <Reference ReferenceType="i=35" IsForward="false">ns=3;i=5001</Reference>
   </References>
  </UAObject>
```

The present embodiments advantageously ease updates on industrial machines or devices using a runtime environment for executing OPC UA or alternative graph-based information models for automation purposes. Information models on such industrial machines may be updated easily, which enables end-to-end semantic interoperability and which in turn enables complex industrial IoT use cases. A huge variety of commercially available methods and tools are now applicable for OPC UA information models, including methods and tools pertaining to a discovery of information and services, query, validation, reasoning etc.

The present embodiments advantageously enable OPC UA information Models to be extended with a huge variety of alternatively available semantic models, including ontologies of industrial knowledge graphs. There is a particular need for this kind of extension in order to render an OPC UA-based system interoperable with non-OPC UA-based systems, including systems merely based on an RDF/OWL model. The present embodiments may advantageously serve for an alignment of these two previously incompatible information models. The resulting information model may then be provided in RDF/OWL. In order to make the information model deployable in an industrial system, it may be transformed from the RDF/OWL model into the OPC UA XML information model by applying the present embodiments.

The present embodiments may advantageously enable a realization of a gateway, which, among other functions, may provide a mapping of an existing (brownfield) data model into a standardized OPC UA information model. One possible realization may include a representation of both information models in RDF/OWL. The resulting (integrated) information model may be converted to an OPC UA standardized format by applying the present embodiments. In other words, the present embodiments may advantageously enable a brownfield integration into a system operating according to the OPC UA standard.

The current practice of validating OPC UA Information Models with commonly available software technologies enables effective validation and corrections of the information model. Before methods according to the present embodiments were conceived, however, a validated and corrected model could not be transformed back from RDF/OWL to an OPC UA information model deployable on an OPC UA server. Applying the present embodiments now enables amendments in various layers of an OPC UA information model in a way that they can be continuously validated. Thereby continuous operations on an information model are enabled including changing, validating, amending, and deploying the information models.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A method for transforming an ontology pertaining to at least one component of an industrial automation control system into a graph-based information model for automation purposes, the method including the steps of:
- retrieving at least one node class of said ontology and expressing said at least one node class by at least one node in the graph-based information model;
- retrieving semantic descriptions of at least one object property and/or at least one class of the ontology and expressing the semantic descriptions by at least one forward reference and at least one additional backward reference for interconnecting said at least one node with at least one child node in the graph-based information model;
- structuring the graph-based information model by a machine-readable syntax.

2. The method according to claim 1, including the step of:
retrieving semantic descriptions of at least one source node class referencing a target node class and expressing the at least one source node class by at least one parent node and the at least one target node class by at least one child node in the graph-based information model.

3. The method according to claim 2, including the step of:
entering an identification assigned to the source node class into a field denominating the parent node of the child node in the graph-based information model.

4. The method according to one of the aforementioned claims, including the step of:
retrieving semantic descriptions of at least one source node class including a modelling rule and expressing the semantic descriptions by at least one node being referenced by the source node in the graph-based information model.

5. The method according to claim 1, wherein the graph-based information model is a nodeset of an OPC UA data model expressed in XML.

6. The method according to one of the aforementioned claims, wherein the ontology is structured by a semantic ontology language including one of an RDF, OWL and RDFS or RDF schema.

7. A transformation unit comprising:
a processor; and;
a data storage device having stored thereon computer executable program code, which, when executed by the processor, causes the processor to:
- retrieve at least one node class of said ontology and expressing said at least one node class by at least one node in the graph-based information model;
- retrieve semantic descriptions of at least one object property and/or at least one class of the ontology and express the semantic descriptions by at least one forward reference and at least one additional backward reference for interconnecting said at least one node with at least one child node in the graph-based information model;
- structure the graph-based information model by a machine-readable syntax.
